# EUROPÄISCHE PATENTANMELDUNG

(11) **EP 2 995 536 A2**
(43) Veröffentlichungstag der Anmeldung: **16.03.2016**
(21) Anmeldenummer: 15184396.8
(22) Anmeldetag: 09.09.2015
(51) Int. Cl.: B62D 61/06

(54) **FAHRZEUG MIT TETRAEDERFÖRMIGEM FAHRGESTELL**

(30) Priorität: 15.09.2014 CH 13882014
(71) Anmelder: Killer, Andreas, 5442 Fislisbach (CH)
(72) Erfinder: KILLER, Andreas, 5442 Fislisbach (CH)
(74) Vertreter: Tompkin, Christine

(57) **Zusammenfassung**

Ein Fahrzeug mit einem tetraederförmigen Fahrgestell (1) weist an allen Eckpunkten des Tetraeders eine drehbare Achse (5, 9). An jedem Eckpunkt eines gleichseitigen Dreiecks des Tetraeders ist an dessen drehbaren Achse ein Rad (6) befestigt. Am vierten Eckpunkt ist an seiner drehbaren Achse (9) eine Last, beispielsweise ein Fahrersitz angeordnet. Alle vier Drehachsen sind mittels eines Steuerantriebs (13) und einem Kardanantrieb synchronisiert im ihre Achse drehbar, wobei die drei Räder (6) durch einen Antrieb (14) und ein Getriebe um ihre Radachse bewegbar sind. Das erfindungsgemässe Fahrzeug hat den Vorteil, dass es kein Differential benötigt, äusserst stabil ist, auf kleinem Raum wendig ist und auch in steilem oder unebenem Gelände anwendbar ist. Durch die synchronisiert drehbaren Drehachsen (5) der Räder (6) ist eine Fahrt aus jeder Position und in jede Richtung möglich. Der Fahrersitz ist stets in der Fahrtrichtung des Fahrzeugs ausgerichtet, sodass ein Fahrer keine Fliehkräfte und keinen Schwindel erfährt. Das Fahrzeug kann entlang einer Spirallinie auf kleinem Raum beschleunigt und abgebremst werden.

## Beschreibung

### Technisches Gebiet

Die Erfindung betrifft ein Fahrzeug mit tetraederförmigem Fahrgestell.

### Stand der Technik

Ein Fahrzeug mit einem tetraederförmigem Fahrgestell ist beispielsweise aus US3,395,664 bekannt. Dort ist ein durch Wind betriebenes Vehikel mit einem tetraederförmigem Rahmen beschrieben, an dessen höchsten Eckpunkt ein Masten für ein Segel und an jedem der drei weiteren Eckpunkten ein Schwimmkörper mit einem Ruder befestigt ist. Zwischen zwei dieser drei Schwimmkörper ist eine Sitzfläche für einen Fahrer angeordnet. Zwei dieser Ruder sind durch eine Stange miteinander verbunden, sodass das Fahrzeug dadurch vom Fahrer gesteuert wird, indem die Position beider Ruder miteinander verändert wird. Das Gerät zeichnet sich aufgrund des Tetraeders durch eine hohe Stabilität aus, insbesondere während einer schnellen Fahrt, sowie einer einfachen Manövrierbarkeit. Die Ruder können auch durch Räder ersetzt werden.

### Beschreibung der Erfindung

Der Erfindung ist die Aufgabe gestellt, ein Fahrzeug mit hoher Stabilität und Wendigkeit zu schaffen.

Es wird ein Fahrzeug mit einem tetraederförmigen Fahrgestell offenbart, das erfindungsgemäss an allen vier Eckpunkten des Tetraeders jeweils eine drehbare Achse aufweist, wobei alle Drehachsen parallel zueinander verlaufen. An drei Eckpunkten des tetraederförmigen Fahrgestells ist jeweils an dessen drehbaren Achse ein Fortbewegungsmittel befestigt. Am vierten Eckpunkt ist an seiner drehbaren Achse eine Vorrichtung für eine Lastaufnahme angeordnet. Alle vier Drehachsen sind synchronisiert um ihre Achse drehbar, wobei die drei Fortbewegungsmittel ebenfalls synchronisiert durch einen Antrieb fortbewegbar sind.

In einer Ausführung der Erfindung weist das Fahrzeug zwecks der synchronisierten Steuerbarkeit der Drehachsen Kardanantriebe auf.

In einer alternativen Ausführung der Erfindung weist das Fahrzeug zwecks der synchronisierten Steuerbarkeit der vier Drehachsen einen Kettenantrieb auf.

In einer weiteren Ausführung der Erfindung weist das Fahrzeug einen Steuermotor zum Antrieb der Kardanantriebe oder des Kettenantriebs auf.

In einer Ausführung der Erfindung sind an den drei Drehachsen an den drei Eckpunkten des tetraederförmigen Fahrgestells jeweils Räder mittels einer Radaufhängung angeordnet, die jeweils um die Achse ihrer Radaufhängung synchronisiert drehbar sind.
In einer weiteren Ausführung weist das Fahrzeug einen Antriebsmotor und ein Getriebe zur synchronisierten Bewegung der Räder um ihre Radachse.

In einer weiteren Ausführung der Erfindung weist das Fahrzeug eine Scheibenbremse auf.

In einer Ausführung der Erfindung weist das Fahrzeug zwecks des Antriebs der Räder an jedem Rad einen Nabenmotor oder einen elektrischen Schrittmotor auf. Die Nabenmotoren oder die elektrischen Schrittmotoren sind zu ihrer Synchronisierung mit einer Steuereinheit verbunden.

In einer beispielhaften Ausführung der Erfindung ist an der Drehachse am vierten Eckpunkt des Tetraeders ein Fahrersitz für eine Person oder eine Vorrichtung zur Befestigung eines Gegenstands angeordnet.

Bei dem erfindungsgemässen Fahrzeug sind die drei Drehachsen für die Fortbewegungsmittel sowie die Drehachse für die Lastaufnahme zum Beispiel mittels eines Steuermotors synchron um ihre Achse drehbar. Durch die rundum drehbaren Achsen der Fortbewegungsmittel und der Lastaufnahme ist eine Fahrt aus jeder Position und in jede Richtung möglich. Es können also alle Drehachsen gleichzeitig, in gleicher Geschwindigkeit und in gleichem Ausmass um ihre Achse, zum Beispiel vertikale Achse, gedreht werden. Im Stillstand sowie während der Fahrt sind durch die synchronisierte Drehbarkeit alle Fortbewegungsmittel sowie die Lastvorrichtung stets in die gleiche Richtung gerichtet. Bei einer Fahrt entlang einer Kurvenlinie wird die Ausrichtung aller Fortbewegungsmittel sowie der Lastaufnahme kontinuierlich und synchron geändert. Die Fortbewegungsmittel bleiben dadurch stets gleich ausgerichtet, sodass der Kurvenradius für alle Räder gleich ist und kein Differential notwendig ist.
Die Vorrichtung zur Lastaufnahme, beispielsweise der Fahrersitz oder die Halterung für einen Gegenstand, sind ebenfalls stets gleich wie die Fortbewegungsmittel ausgerichtet. Das erfindungsgemässe Fahrzeug erlaubt somit für den Fahrer oder den Gegenstand eine stets nach vorn gerichtete Fahrt. Wird das Fahrzeug entlang einer Kurve gesteuert, so ist der Fahrer stets entlang der Tangente der Kurve gerichtet. Der Fahrer oder der Gegenstand erfährt also zu keiner Zeit Fliehkräfte. Dadurch verläuft die Fahrt äusserst stabil und ruhig. Zudem erfährt der Fahrer auch bei einer kurvenreichen oder spiralförmigen Fahrt keinen Schwindel.
Das Fahrzeug kann zu seiner Abbremsung oder Beschleunigung spiralförmig gefahren werden. Dies erlaubt eine Abbremsung auf kleinem Raum. Der Fahrer erfährt dabei eine Kraft nach hinten und wird in die Sitzlehne gedrückt. Er fällt nicht nach vorne, wie es bei der Bremsung von herkömmlichen Fahrzeugen der Fall ist; auch fällt er nicht seitlich nach aussen. Die Kraft nach hinten ergibt sich aus der spiralförmigen Route mit dem sich stetig verkleinerndem Kreisradius und der damit verbundenen sich stetig in ihrer Richtung anpassenden Zentripetalkraft.

Das Fahrzeug verfügt über eine äusserst hohe Stabilität, die zum Einen der Tetraederform des Gestells, zum Anderen auf der synchronisiert gesteuerten Drehbarkeit der Fortbewegungsmittel und der Drehachse für die Lastaufnahme zugrundeliegt.
Dank seiner hohen Stabilität eignet sich das Fahrzeug für die Fahrt in flachem sowie auch hügeligem und unebenem, insbesondere auch steilem Gelände. Während die Ausführung des Fahrzeugs mit Rädern für die meisten Anwendungen am besten geeignet ist, sind auch andere Fortbewegungsmittel wie Jets zwecks einer Fortbewegung im Wasser denkbar.
Durch die individuelle aber synchronisierte Steuerbarkeit der Räder ist das Fahrzeug sehr wendig, indem es sich auf kleinstem Raum drehen lässt. Deshalb eignet es sich insbesondere für Rollstühle, insbesondere selbst betätigbare Rollstühle. Das Fahrzeug lässt sich jedoch auch zur Aufnahme eines Gegenstands wie zum Beispiel einem Mess- oder Suchgerät ausführen, das dank seiner Wendigkeit in begrenzten Räumen eingesetzt werden kann. Da das Fahrzeug dank seiner Stabilität auch sehr steiles Gelände ohne zu kippen befahren kann, ist es auch in besonderen Situationen wie zum Beispiel Druckstollen einsetzbar.

Weitere Vorteile der Erfindung folgen aus der nachfolgenden Beschreibung, in welcher die Erfindung anhand eines in den schematischen Zeichnungen dargestellten Ausführungsbeispieles näher erläutert wird.

### Kurze Beschreibung der Figuren

Fig. 1 zeigt eine schematische Darstellung in Perspektive des erfindungsgemässen tetraederförmigen Fahrzeugs.
Fig. 2 zeigt eine schematische Draufsicht des Fahrzeugs aus Figur 1.
Fig. 3 zeigt eine schematische Seitenansicht eines erfindungsgemässen Fahrzeugs. Bezogen auf die Darstellung in Figur 1 entspricht sie der Sicht gemäss der Pfeilanzeige III in Figur 1.
Fig. 4 zeigt eine weitere schematische Seitenansicht des erfindungsgemässen Fahrzeugs. Bezogen auf die Darstellung in Figur 1 entspricht sie der Sicht gemäss der Pfeilanzeige IV in Figur 1.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

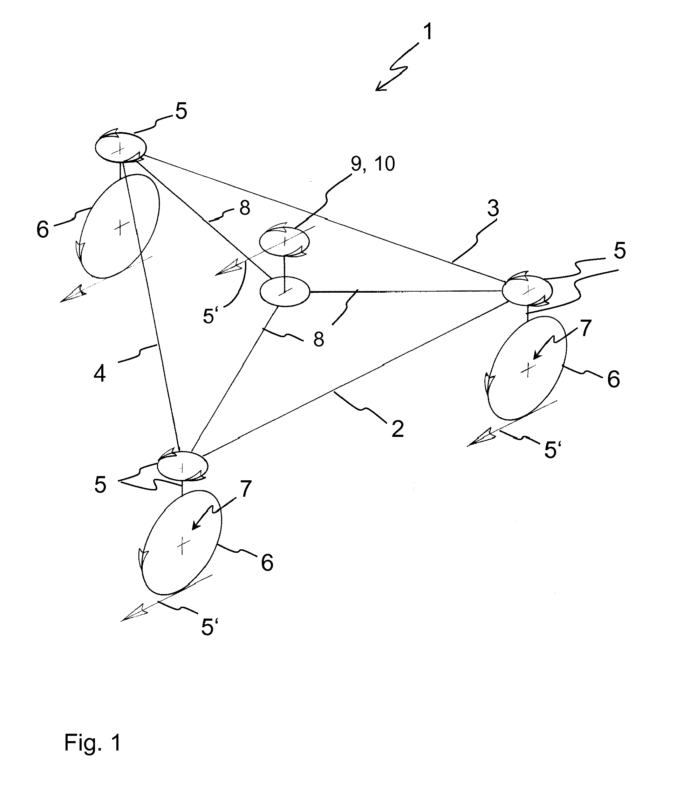

In der Figur 1 ist ein Beispiel eines erfindungsgemässen Fahrzeugs in der Ausführung eines Gefährts mit Rädern gezeigt. Es weist ein Fahrgestell 1 in der Form eines Tetraeders mit einem gleichseitigen Dreieck mit Seiten 2, 3 und 4, das in der gezeigten Position horizontal liegt. An jeder Ecke des Dreiecks 2, 3, 4 sind Radaufhängungen mit Drehachsen 5 angeordnet, an denen ein Rad 6 befestigt ist. Durch synchronisierte gesteuerte Drehung dieser Radaufhängungen um Drehachsen 5 gemäss den Pfeilen um die Achse 5 werden die Räder synchronisiert ausgerichtet. Über dem Dreieck 2, 3, 4 ist über drei Stangen 8 der vierte Eckpunkt mit der vierten Drehachse 9 und einer Lastaufnahme 10 angeordnet. Hier kann zum Beispiel ein Fahrersitz oder eine Plattform für einen Gegenstand mit Befestigungen angeordnet sein. Durch die synchronisierte gesteuerte Drehung der Drehachse 9 wird der Fahrersitz oder die Befestigung für einen Gegenstand synchronisiert mit den Drehachsen 5 der Aufhängungen der Räder 6 stets gleich ausgerichtet.
Der Tetraeder des Gestells 1 kann gleichmässig, d.h. auf allen vier Seiten gleichseitig sein, indem die Stangen 8 gleich lang sind wie die Seiten des Dreiecks 2,3,4. Der Tetraeder kann auch ungleichmässig sein. Zum Beispiel können die Stangen 8 je nach Anwendung auch kürzer oder länger sein, sodass die Lastaufnahme und somit der Fahrersitz tiefer bzw. höher liegt. Die Lastaufnahme kann beispielsweise auch auf gleicher Höhe wie die Stangen 2, 3, 4 liegen. In dem gezeigten Beispiel ist der vierte Eckpunkt 10 nur leicht über dem Dreieck 2,3,4 angeordnet. Ein Fahrersitz in dieser Position ist dann leichter zu besteigen. Dabei kommt auch der Schwerpunkt des Fahrzeugs tiefer zu liegen.

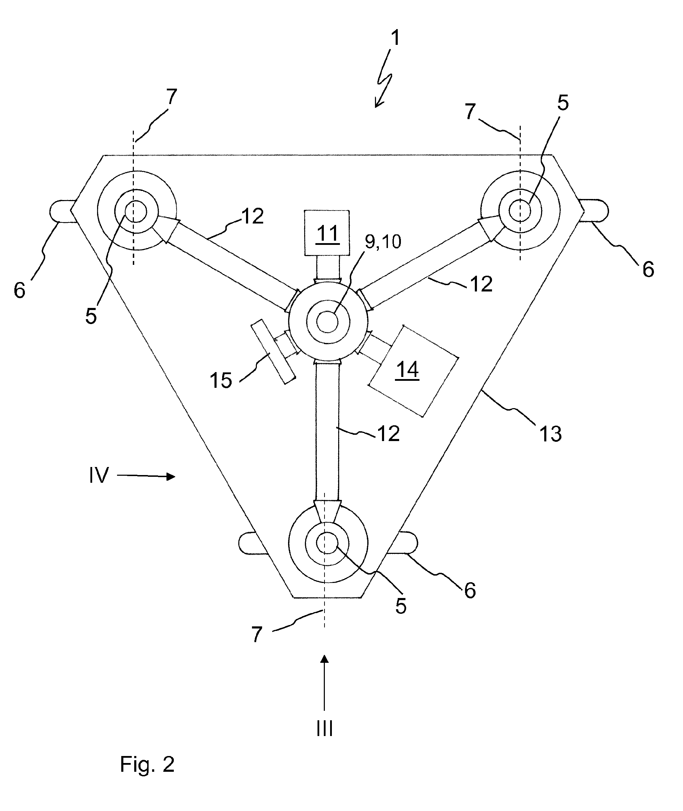

Figur 2 zeigt in der Draufsicht des erfindungsgemässen Fahrzeugs die Lastaufnahme 10 mit Drehachse 9 und drei Kardanantrieben mit Kardanwellen 12, die entlang den (in Figur 1 gezeigten und in Figur 2 nicht dargestellten) Stangen 8 verlaufen. Sie führen vom Drehpunkt 9 zu den drei Eckpunkten des gleichseitigen Dreiecks des Tetraeders 1, wobei an jedem der drei Eckpunkte jeweils die vertikal verlaufende Drehachse 5 angeordnet ist. Es sind hier insbesondere eine beispielhafte Anordnung eines Steuermotors 11 für die synchronisierte Steuerung und Drehung der vier Drehachsen 5, 9 und eines Antriebmotors 14 für die Fortbewegung der Räder, in dieser Ausführung der Drehung der Räder 6 um ihre Radachse 7. Zudem weist die gezeigte Ausführung des Fahrzeugs eine Scheibenbremse 15 für die Abbremsung der Drehung der Räder 6 um ihre Radachse 7 auf. Der Steuermotor 11 und der Antriebsmotor 14 sind auf einer Platte 13 befestigt. Die (in dieser Figur 2 nicht gezeigten) Stangen 2, 3, 4 aus Figur 1 können über oder unter der Platte 13 verlaufen. Ist auf der Lastaufnahme ein Fahrersitz, so kann ein Fahrer von der Sitzstellung auf, den Steuermotor 11 betätigen, entweder direkt oder über eine mit dem Motor verbundene Steuereinheit. Alternativ kann der Steuermotor 11 auch ferngesteuert werden. Unter der Platte 13, und deshalb nicht dargestellt, befinden sich die Stangen 2, 3,4 des gleichseitigen Dreiecks, an deren Ecken die Räder 6 mittels einer Radaufhängung mit Drehachse 5 angeordnet sind. Die Drehachsen 5 der synchron drehbaren Räder 6 erstrecken sich vertikal durch die Platte 13.

Alternativ kann die synchronisierte Drehung der Achsen der Räder 6 und der Lastaufnahme 10 um Drehachsen 5 bzw. 9 auch durch einen Kettenantrieb realisiert werden. Hierzu führt eine Kette von einem ersten Eckpunkt des Dreiecks 2,3,4 entlang der Seite 2 zum nächsten Eckpunkt, entlang der Seite 3 zum nächsten Eckpunkt, von dort entlang einer Stange 8 zum vierten Eckpunkt 9 des Tetraeders und von dort entlang einer weiteren Stange 8 wieder zum ersten Eckpunkt. Beim Vierten Eckpunkt 9 wird die Kette über drei Zahnräder geführt, sodass die Drehrichtung der vierten Drehachse 9 entgegen der Drehrichtung der Drehachsen 5 ist. Die Drehung der vier Achsen 5, 9 um ihre Achse wird wiederum durch einen Steuerungsmotor realisiert.

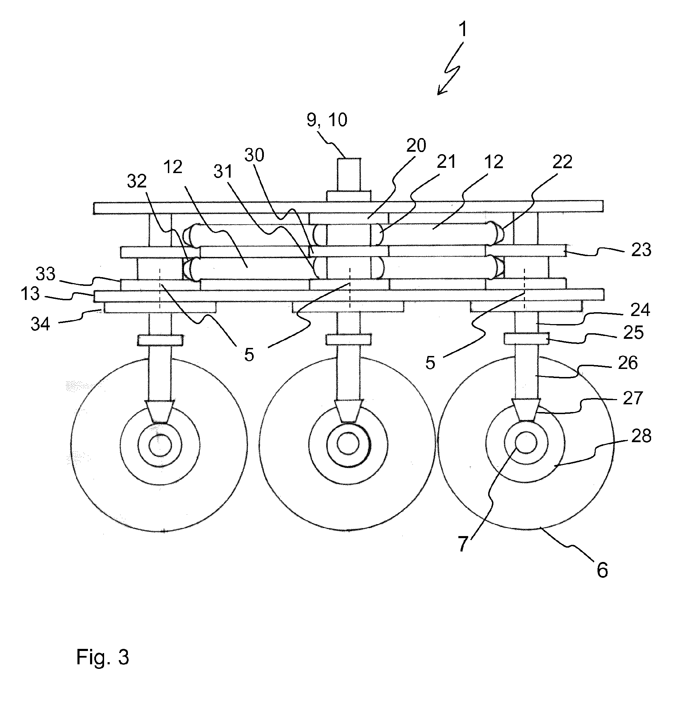

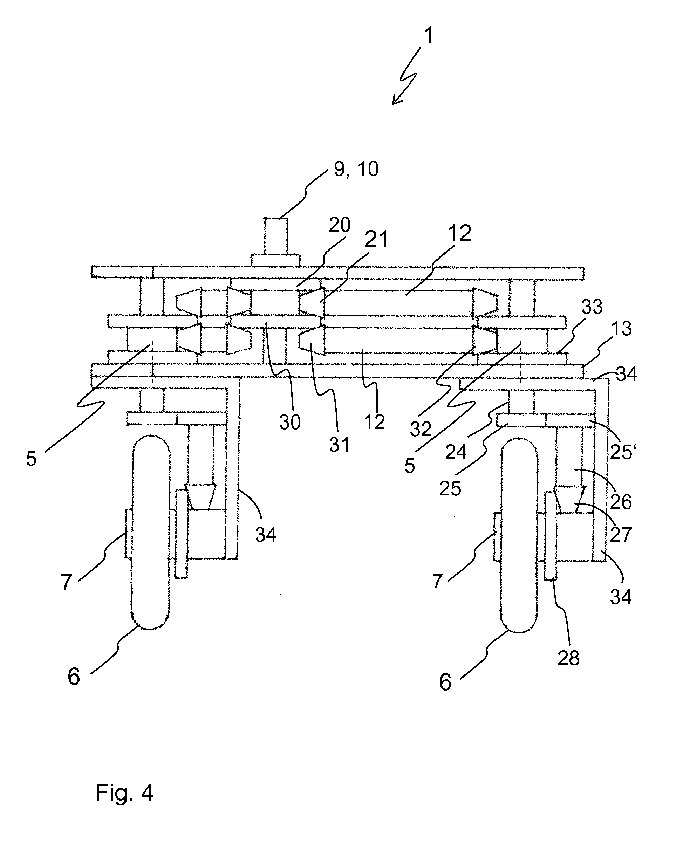

In Figur 3 ist in der Seitenansicht des erfindungsgemässen Fahrzeugs aus Figur 1 und 2 insbesondere eine Ausführung des synchronisierten Antriebs und der synchronisierten Steuerung mittels eines Kardangetriebes gezeigt. Dabei wird der Antrieb der drei Räder 6, das heisst deren Fortbewegung, durch Elemente 20-28 und die synchronisierte Steuerung und Drehung der Räder 6, d.h. deren Ausrichtung und Drehung um die Achse ihrer Radaufhängung, und der Lastaufnahme 10 durch Elemente 30-34 dargestellt.
Der Antrieb der Räder ist durch den Antriebsmotor 14, wie in Figur 2 gezeigt, realisiert, der ein erstes Zahnrad 20 antreibt. Das Drehmoment dieses Zahnrads 20 wird über ein Kegelrad 21 auf drei Kardanwellen 12, die zu allen drei Rädern 6 führen wie in Figur 2 gezeigt, wobei in der Seitenansicht von Figur 3 nur zwei Kardanwellen 12 zu sehen sind. Von den Kardanwellen 12 wird das Drehmoment über ein weiteres Kegelrad 22 auf ein Stirnrad 23 übertragen. Das Stirnrad 23 dreht eine Welle 24, auf der ein weiteres Stirnrad 25 befestigt ist. Das Drehmoment wird vom Stirnrad 25 über ein weiteres Stirnrad 25' wie in der Ansicht von Figur 4 gezeigt auf eine weitere Welle 26 mit Kegelrad 27 übertragen. Von dort wird es weiter auf ein Stirnrad 28, das auf der Radachse 7 des Rads 6 befestigt ist, übertragen, wodurch das Rad 6 um seine Radachse 7 in Bewegung gesetzt wird.

Die synchronisierte Steuerung der Räder 6 und der Lastaufnahme wird anhand von Figur 3 und 4 weiter erläutert. Die in diesem Beispiel gezeigte Steuerung enthält die mit Bezugszeichen 30-34 angezeigten Elemente. Der Steuermotor 14 wie in Figur 2 gezeigt treibt ein zweites Zahnrad 30 an, das unter dem ersten Zahnrad 20 angeordnet ist und mit der Drehachse 9 mit der Lastaufnahme 10 fest verbunden ist. Das Drehmoment des zweiten Zahnrads 30 wird mittels drei Kardangetrieben mit Kardanwellen 12 wie in Figur 2 gezeigt auf die Räder übertragen. Wiederum sind in der Seitenansicht von Figur 3 sowie 4 nur zwei der drei Kardanwellen 12 zu sehen. Hierzu wird zunächst das Drehmoment des zweiten Zahnrads 30 auf ein Kegelrad 31, die Kardanwelle 12 und ein weiteres Kegelrad 32 auf ein Stirnrad 33 übertragen. Das Drehmoment des Stirnrads 33 wird über eine Welle mit Drehachse 5 auf die Radaufhängung 34 für das Rad 6 übertragen, wodurch das Rad 6 um die vertikale Achse 5 der Radaufhängung 34 gedreht wird.
Durch den Steuermotor 11 und das zweite Zahnrad 30 sind alle drei Räder synchronisiert um ihre Drehachsen 5 drehbar. Gleichsam ist die Drehung der Lastaufnahme 10 um seine Drehachse 9 durch den Steuermotor 11 und über das zweite Zahnrad 30 synchronisiert mit der Drehung der Räder 6 um Achsen 5 realisiert.

In einer alternativen Ausführung sind jeweils alle drei Räder 6 mit einem individuellen elektrischen Antrieb, einem Nabenmotor oder einem elektrischen Schrittmotor ausgerüstet. Die Synchronisierung kann beispielsweise mittels einer zentralen Steuerung realisiert werden, wobei die einzelnen Antriebe über Leitungen oder über Funk mit der zentralen Steuerung verbunden sind. Sowohl die synchronisierte Ausrichtung der Räder und der Lastaufnahme als auch die synchronisierte Drehung der Räder um ihre Radachsen sind auf diese Weise realisierbar.

### Bezugszeichenliste

- 1: Tetraederförmiges Gestell
- 2: Dreieckspunkt
- 3: Dreieckspunkt
- 4: Dreieckspunkt
- 5: Drehachse
- 6: Rad
- 7: Radachse
- 8: Stangen zu viertem Eckpunkt
- 9: Drehachse
- 10: Lastaufnahme
- 11: Steuermotor für Kardanantrieb
- 12: Kardanantrieb
- 13: Platte
- 14: Antriebsmotor
- 15: Scheibenbremse
- 16: -
- 17: -
- 18: -
- 19: -
- 20: AntriebsZahnrad
- 21: Kegelrad
- 22: Kegelrad
- 23: Stirnrad
- 24: Welle
- 25: Stirnrad
- 25': Stirnrad
- 26: Welle
- 27: Kegelrad
- 28: Stirnrad
- 28,29: -
- 30: Zahnrad
- 31: Kegelrad
- 32: Kegelrad
- 33: Stirnrad
- 34: Radaufhängung

## Patentansprüche

1. Fahrzeug mit einem tetraederförmigen Fahrgestell (1), das an allen vier Eckpunkten des Tetraeders jeweils eine drehbare Achse (5, 9) aufweist, wobei alle vier Drehachsen parallel zueinander verlaufen, und wobei an drei Eckpunkten des tetraederförmigen Fahrgestells (1) an jeweils dessen drehbaren Achse (5) ein Fortbewegungsmittel (6) befestigt ist, und am vierten Eckpunkt an seiner drehbaren Achse (9) eine Vorrichtung für eine Lastaufnahme (10) angeordnet ist, und alle vier Drehachsen (5, 9) synchronisiert um ihre Achse drehbar sind, wobei die Fortbewegungsmittel (6) an den drei Eckpunkten synchronisiert durch einen Antrieb (14) fortbewegbar sind.

2. Fahrzeug nach Anspruch 1
**dadurch gekennzeichnet, dass**
das Fahrzeug zwecks der synchronisierten Steuerbarkeit der Drehachsen (5) Kardanantriebe (12) aufweist.

3. Fahrzeug nach Anspruch 1
**dadurch gekennzeichnet, dass**
das Fahrzeug zwecks der synchronisierten Steuerbarkeit der vier Drehachsen (5, 9) einen Kettenantrieb aufweist.

4. Fahrzeug nach Anspruch 2 oder 3
**dadurch gekennzeichnet, dass**
das Fahrzeug einen Steuermotor (11) zum Antrieb der Kardanantriebe (12) oder des Kettenantriebs aufweist.

5. Fahrzeug nach einem der vorangehenden Ansprüche 1-4
**dadurch gekennzeichnet, dass**
an den drei Drehachsen (5) an den drei Eckpunkten des tetraederförmigen Fahrgestells (1) jeweils Räder (6) mittels einer Radaufhängung (34) angeordnet sind, die synchronisiert jeweils um die Achse (5) ihrer Radaufhängung (34) drehbar sind.

6. Fahrzeug nach Anspruch 5
**dadurch gekennzeichnet, dass**
das Fahrzeug einen Antriebsmotor (13) und ein Getriebe zur synchronisierten Fortbewegung der Räder (6) jeweils um ihre Radachse (7) aufweist.

7. Fahrzeug nach Anspruch 5
**dadurch gekennzeichnet, dass**
das Fahrzeug eine Scheibenbremse (15) aufweist.

8. Fahrzeug nach Anspruch 5
**dadurch gekennzeichnet, dass**
das Fahrzeug an jedem Rad (6) zwecks ihres Antriebs jeweils einen Nabenmotor oder einen elektrischen Schrittmotor aufweist.

9. Fahrzeug nach Anspruch 8
**dadurch gekennzeichnet, dass**
die Nabenmotoren oder die elektrischen Schrittmotoren zu ihrer Synchronisierung mit einer Steuereinheit verbunden sind.

10. Fahrzeug nach Anspruch 1
**dadurch gekennzeichnet, dass**
die Vorrichtung für eine Lastaufnahme (10) an der Drehachse (9) am vierten Eckpunkt des Tetraeders ein Fahrersitz für eine Person oder eine Vorrichtung zur Befestigung eines Gegenstands angeordnet ist.
